# EUROPÄISCHE PATENTSCHRIFT

(11) **EP 2 910 984 B1**
(45) Veröffentlichungstag und Bekanntmachung des Hinweises auf die Patenterteilung: **17.08.2016**
(21) Anmeldenummer: 15156277.4
(22) Anmeldetag: 24.02.2015
(51) Int. Cl.: G02B 27/09, G02B 27/10, G02B 27/12, H01S 3/00, G01J 1/42, G02B 3/00, G01J 1/38, G01J 1/02, G01J 1/04

(54) **Linse mit wenigstens einer objektseitigen und mindestens einer bildseitigen lichtbrechenden Fläche**
Lens with at least one refractive surface on both the object side and the image side
Lentille dotée d'au moins une surface réfringente côté objectif et au moins côté image

(30) Priorität: 25.02.2014 DE 102014203324
(43) Veröffentlichungstag der Anmeldung: 26.08.2015
(73) Patentinhaber: Sypro Optics GmbH, 07745 Jena (DE)
(72) Erfinder: Stelzer, Carsten, 99425 Weimar (DE)
(74) Vertreter: Gulde & Partner

(56) Entgegenhaltungen:
- EP-A1- 0 683 574
- EP-A1- 2 650 704
- EP-A2- 0 209 108
- WO-A1-98/00747

## Beschreibung

Die Erfindung betrifft eine Wabenkondensorlinse mit mehreren objektseitigen und mehreren bildseitigen lichtbrechenden Flächen.

Linsen der eingangs genannten Art sind allgemein bekannt und werden vielfach zur Abbildung verwendet. Oftmals sollen bei der Abbildung jedoch Teillichtmengen aus einem durch die Linse hindurch tretenden Lichtstrom ausgekoppelt werden, um beispielsweise die Lichtintensität des Lichtstroms in Abbildungsvorrichtungen zu messen. Hierzu wurden bisher teildurchlässige Spiegel verwendet, die entlang des Lichtstroms vor oder hinter der Linse angeordnet sind. Die Verwendung der teildurchlässigen Spiegel erfordert allerdings zusätzlichen Bauraum, der insbesondere bei kompakten Abbildungsvorrichtungen nur begrenzt vorhanden ist. Ferner sind Linsen oder Linsensysteme mit Reflexionsflächen in EP 0 209 108 A2, WO 98/00747 A1, EP 0 683 574 A1 und EP 2 650 704 A1 offenbart.

Es ist daher die Aufgabe der Erfindung, eine Wabenkondensorlinse bereitzustellen, mit der eine Messung der Lichtintensität einfach und platzsparend möglich ist.

Diese Aufgabe wird für die eingangs genannte Wabenkondensorlinse dadurch gelöst, dass die Wabenkondensorlinse eine schräg zur optischen Achse der Wabenkondensorlinse ausgerichtete Reflexionsfläche aufweist, wobei die Reflexionsfläche zwischen den objektseitigen und der bildseitigen Flächen angeordnet ist, wobei die Reflexionsfläche am Grund einer sich in die Wabenkondensorlinse hinein erstreckenden Öffnung angeordnet ist, und wobei quer zur optischen Achse die Größe der Reflexionsfläche der Größe einer Teillinse oder einem Vielfachen der Größe einer Teillinse der Wabenkondensorlinse entspricht.

An der Reflexionsfläche wird Licht aus dem in die Wabenkondensorlinse einfallenden Lichtstrom durch Reflexion ausgekoppelt, sodass der Lichtstrom als ein Nutzlichtstrom nur teilweise durch die bildseitige Fläche der Linse treten kann. Das an der Reflexionsfläche reflektierte Licht wird also ohne weiteres aus dem Lichtstrom hinaus reflektiert bzw. ausgekoppelt, ohne dass weitere optische Komponenten, etwa teildurchlässige Spiegel, nötig sind. Die erfindungsgemäße Wabenkondensorlinse ermöglicht also einen kompakten Aufbau von Abbildungsvorrichtungen. Ferner fallen keine Kosten für weitere optische Komponenten zur Auskopplung von Licht aus dem Lichtstrom an. Darüber hinaus koppelt die Wabenkondensorlinse Licht mit einer geringen Toleranzanfälligkeit aus dem Lichtstrom aus, da die Reflexionsfläche Teil der Wabenkondensorlinse ist und nicht beim Aufbau der Abbildungsvorrichtung ausgerichtet zu werden braucht.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen.

So kann die Reflexionsfläche ausgebildet sein, Licht des in die Linse objektseitig einfallenden Lichtstroms teilweise in Richtung auf einen Randbereich der Linse zu reflektieren. Der Randbereich der Linse kann so ausgebildet sein, dass der an der Reflexionsfläche reflektierte Teillichtstrom ohne weiteres durch den Randbereich der Linse hindurchtreten kann.

Zur Messung der Lichtintensität kann eine die Linse aufweisende Abbildungsvorrichtung mit einem Lichtintensitätsmessmittel versehen sein, wobei das Lichtintensitätsmessmittel von der Reflexionsfläche aus gesehen hinter dem Randbereich angeordnet ist. Streulicht oder Teile des durch die Linse hindurchtretenden Lichtstroms beeinträchtigen die Intensitätsmessung des ausgekoppelten Teillichtstroms nicht. Anhand der Lichtintensität des Teillichtstroms kann auf die Lichtintensität des einfallenden Lichtstroms und des Nutzlichtstroms geschlossen werden. Anstelle oder zusätzlich zur Messung der Lichtintensität können auch andere Parameter, etwa die Farbe oder die Farbtemperatur des Teillichtstroms gemessen werden und hierzu geeignete Messmittel anstatt des oder zusätzlich zum Lichtintensitätsmessmittel vorgesehen sein.

Vorzugsweise ist der Randbereich mit einer Auskopplungsfläche versehen oder besteht aus dieser. Die Auskopplungsfläche ist so ausgebildet und zum Beispiel so beschichtet, dass der Teillichtstrom ohne weiteres durch die Auskopplungsfläche hindurch und zum Messmittel gelangen kann, ohne nennenswert an der Auskopplungsfläche reflektiert zu werden. Die Auskopplungsfläche kann auch als lichtbrechende Fläche ausgeführt sein.

Insbesondere kann die Reflexionsfläche ausgebildet sein, parallel zur optischen Achse in die Linse einfallendes Licht in Richtung auf den Randbereich der Linse zu reflektieren. Der Randbereich der Linse kann so ausgerichtet sein, dass das parallel zur optischen Achse in die Linse einfallende Licht nach der Reflexion an der Reflexionsfläche senkrecht zum Randbereich ausgerichtet ist. Der reflektierte Teillichtstrom kann somit verlustarm durch den Randbereich transmittiert werden, ohne dass Licht des Teillichtstroms nennenswert gebrochen oder reflektiert wird.

Vorzugsweise ist die Reflexionsfläche eben ausgebildet, sodass parallel zur optischen Achse in die Linse einfallendes Licht in Form eines Teillichtstroms mit einer im Wesentlichen konstanten Breite reflektiert wird. Dies vereinfacht die Ausrichtung des Teillichtstroms auf das Messmittel.

Die Reflexionsfläche kann ein in der Linse angeordnetes und beispielsweise mit dieser vergossenes Reflexionselement, etwa ein Spiegelplättchen, sein. In einer bevorzugten weil besonders einfach aufgebauten Ausgestaltungsform kann die Reflexionsfläche jedoch durch eine Oberfläche der Linse ausgebildet sein. Ein Anbringen eines mit der Reflexionsfläche versehenen Reflexionselements an oder in der Linse ist somit nicht notwendig. Oberflächen der Linse sind in der Regel nicht ohne weiteres verschieb- oder drehbar mit Bezug auf andere Teile der Linse, sodass die Ausrichtung der Reflexionsfläche zur optischen Achse der Linse im Wesentlichen unveränderlich ist, wodurch der Anteil des aus dem Lichtstrom heraus reflektierten Lichtes und die Ausrichtung des Teillichtstroms konstant gehalten werden kann.

Die Reflexionsfläche kann reflektierend und zum Beispiel mit einer reflektierenden Schicht, die Aluminium aufweisen kann, versehen ausgebildet sein. Bevorzugt ist jedoch ein Winkel zwischen der Reflexionsfläche und der optischen Achse der Linse größer als der Grenzwinkel der Totalreflexion. Der Winkel ist insbesondere größer als der Grenzwinkel der Totalreflexion von parallel zur optischen Achse in die Linse objektseitig eintretenden Lichtes. Folglich kann das mit dem Lichtstrom in die Linse eintretende und auf die Reflexionsfläche treffende Licht im Wesentlichen vollständig durch die Reflexionsfläche als Teillichtstrom ausgekoppelt werden, ohne dass Licht, das durch die Reflexionsfläche hindurchtritt, ungewünschte Bereiche beleuchten kann. Ein Anbringen einer reflektierenden Schicht ist nicht notwendig.

Die Reflexionsfläche ist vorzugsweise am Grund einer sich in die Linse hinein erstreckenden Öffnung angeordnet. Die Öffnung kann sich als ein Sackloch oder als eine Nut in die Linse hinein erstrecken. Durch diese Anordnung ist vermieden, dass von der Linse vorstehende und die Reflexionsfläche tragende Elemente zusätzlichen Bauraum benötigen und bei der Montage der Linse zu Problemen führen. Die erfindungsgemäße Linse kann also einfach und ohne zusätzlichen Platzbedarf montiert werden. Ferner kann die Reflexionsfläche einfach durch die Öffnung hindurch oder bei der Einbringung der Öffnung ausgeformt werden.

Die Öffnung kann sich von der objektseitigen Fläche weg öffnen, sodass das durch die objektseitige Fläche in die Linse eintretende Licht durch das Material der Linse hindurch auf die Reflexionsfläche trifft und dort wie bei einem Prisma durch Totalreflexion verlustarm ausgekoppelt werden kann.

Die Öffnung weist quer zur optischen Achse vorzugsweise einen konstanten Querschnitt auf, damit die Linse einfach und zum Beispiel beim Ausformen der Linse mit der Öffnung und der Reflexionsfläche versehen werden kann. Die Öffnung kann durch Spritzguss oder Pressen ausgeformt werden und einen kreisförmigen, ovalen oder polygonalen, etwa rechteckigen, Querschnitt aufweisen.

Quer zur optischen Achse kann die Öffnung geschlossen, also vom Material der Linse vollständig umgeben, ausgeformt sein.

Die Öffnung erstreckt sich vorzugsweise parallel zur optischen Achse, damit sie beim Einsatz der Linse möglichst wenig mit Teilen des einfallenden Lichtstroms, die nicht auf die Reflexionsfläche treffen, interagiert.

In einer weiteren vorteilhaften Ausgestaltungsform kann die Linse eine zweite Reflexionsfläche aufweisen, die zwischen der objektseitigen und der bildseitigen Fläche angeordnet ist. Die beiden Reflexionsflächen können quer zur optischen Achse beabstandet voneinander angeordnet sein, sodass unterschiedliche Bereiche bzw. Abschnitte des Lichtstroms auf die beiden Reflexionsflächen treffen. Folglich besteht die Möglichkeit, beispielsweise Lichtintensitäten unterschiedlicher Abschnitte des in die Linse einfallenden Lichtstroms zu messen. Mit Hilfe der beiden Reflexionsflächen können also zwei Teillichtströme aus dem Lichtstrom ausgekoppelt werden.

Die beiden Reflexionsflächen können entlang der optischen Achse unterschiedlich tief in der Linse angeordnet sein und zum Beispiel parallel zueinander verlaufen , sodass die Teillichtströme zum selben Randbereich verlaufen und sich dabei nicht oder nicht vollständig überlappen. Vorzugsweise sind die Reflexionsflächen jedoch in unterschiedliche und zum Beispiel entgegengesetzte Richtungen zur optischen Achse der Linse verkippt, sodass die Teillichtströme zu unterschiedlichen Randbereichen verlaufen und sich beispielsweise voneinander weg und von der jeweiligen Reflexionsfläche zum nächstgelegenen Randbereich erstrecken. Eine Beeinflussung der Lichtintensität eines der Teillichtströme durch einen anderen der Teillichtströme ist hierdurch verhindert.

Insbesondere kann die Linse mehrere Reflexionsflächen aufweisen, die zwischen der objektseitigen und der bildseitigen lichtbrechenden Fläche angeordnet sind. Beispielsweise weist die Linse drei, vier oder gar mehr Reflexionsflächen auf. Diese Reflexionsflächen können Licht in verschiedene Richtungen und zum Beispiel zu unterschiedlichen Randbereichen aus dem einfallenden Lichtstrom auskoppeln. Alternativ können die wenigstens zwei Reflexionsflächen ausgerichtet sein, um ausgekoppelte Teillichtströme beispielsweise am Randbereich oder außerhalb der Linse zumindest teilweise oder vollständig zu überlappen.

Mehrere kleine Reflexionsflächen mindern die Homogenität des Nutzlichtstroms weniger, als einzelne oder gar eine einzige große Reflexionsfläche. Ferner ist es möglich, die Homogenität des Nutzlichtstroms durch eine geeignete Anordnung mehrerer kleiner Reflexionsflächen zu verbessern. Mit sich überlappenden Teillichtströmen kann die benötigte Anzahl der Messmittel reduziert werden.

Die Linse ist beispielsweise eine Kondensorlinse und insbesondere eine Wabenkondensorlinse zur Homogenisierung des Lichtstroms. Die Wabenkondensorlinse weist mehrere objektseitige und mehrere bildseitige lichtbrechende Flächen auf, wobei die lichtbrechenden Flächen beispielsweise quer zur optischen Achse nebeneinander angeordnete Mikrolinsen ausformen können.

Mit Hilfe der erfindungsgemäßen Wabenkondensorlinse kann der Nutzlichtstrom einer Abbildungsvorrichtung homogenisiert werden, sodass zu einem Zeitpunkt eine Variation der Lichtintensität innerhalb des Nutzlichtstroms möglichst gering von einem Sollwert abweicht. Ferner kann die Lichtintensität des Nutzlichtstroms anhand der Lichtintensität des wenigstens einen Teillichtstroms durch eine Abbildungsvorrichtung auch über längere Zeiträume hinaus gemessen und basierend auf den Messergebnissen die Lichtintensität des Nutzlichtstroms geregelt werden, sodass die Lichtintensität des Nutzlichtstroms auch mit der Zeit im Wesentlichen konstant gehalten werden kann. Die wenigstens eine Reflexionsfläche beeinflusst die Homogenisierung durch die Wabenkondensorlinse wenn überhaupt nur geringfügig. Eine mögliche Beeinflussung kann durch Anpassungen der Wabenkondensorlinse kompensiert werden.

Quer zur optischen Achse kann die Größe der wenigstens einen Reflexionsfläche der Größe einer Teillinse oder einem Vielfachen, beispielsweise einem ganzzahligen Vielfachen, der Größe einer Teillinse der Wabenkondensorlinse entsprechen. Parallel zur optischen Achse kann die zumindest eine Reflexionsfläche hinter zumindest einer der Teillinsen der Wabenkondensorlinse angeordnet sein und sogar mit der Teillinse oder einer zusammenhängenden Gruppe von Teillinsen fluchten. Im Folgenden ist die Erfindung beispielhaft anhand von Ausführungsbeispielen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde.

Es zeigen:
- Fig. 1: eine schematische Darstellung eines ersten Ausführungsbeispiels einer erfindungsgemäßen Linse in einer Schnittansicht;
- Fig. 2: eine schematische Darstellung eines weiteren Ausführungsbeispiels einer erfindungsgemäßen Linse in einer Schnittansicht; und
- Fig. 3: eine schematische Darstellung eines weiteren Ausführungsbeispiels einer erfindungsgemäßen Linse in einer perspektivischen Ansicht.

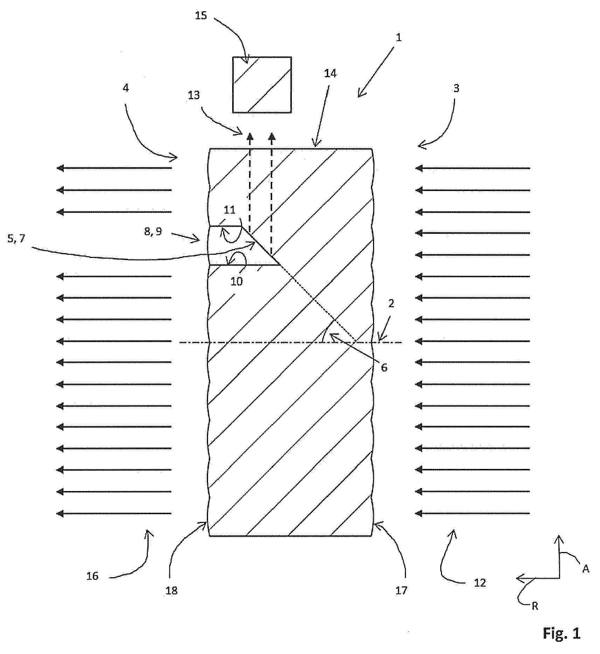

Zunächst sind Aufbau und Funktion einer erfindungsgemäßen Linse mit Bezug auf das Ausführungsbeispiel der Fig. 1 beschrieben.

Figur 1 zeigt die Linse 1 schematisch in einer Schnittdarstellung. Eine optische Achse 2 der Linse 1 verläuft in der Schnittebene der Schnittdarstellung.

Die Linse 1 weist eine objektseitige Seite 3 und eine bildseitige Seite 4 auf, die parallel zur optischen Achse 2 hintereinander angeordnet sind. Die beiden Seiten 3, 4 können jeweils zumindest eine lichtbrechende Fläche aufweisen oder daraus bestehen.

Zwischen der objektseitigen Seite 3 und der bildseitigen Seite 4 ist die Linse 1 mit einer Reflexionsfläche 5 versehen, wobei die Reflexionsfläche 5 schräg zur optischen Achse 2 ausgerichtet ist. Ein Winkel 6 zwischen der optischen Achse 2 und der Reflexionsfläche 5 ist vorzugsweise größer als der Grenzwinkel der Totalreflexion des Lichtes, wenn es beispielsweise parallel zur optischen Achse 2 durch die objektseitige Seite 3 in die Linse 1 eintritt.

Die Reflexionsfläche 5 ist am Grund 7 einer sich in die Linse 1 hinein erstreckenden Öffnung 8 angeordnet, wobei sich die Öffnung 8 von der objektseitigen Seite 3 der Linse 1 weg öffnet. Ein durch die Öffnung 8 gebildeter Durchbruch 9 ist also in der bildseitigen Seite 4 angeordnet. Seitenwände 10, 11 der Öffnung 8 verlaufen vorzugsweise im Wesentlichen parallel zur optischen Achse 2. In die Linse 1 beispielsweise parallel zur optischen Achse 2 einfallendes Licht trifft nicht oder möglichst wenig auf die Seitenwände 10, 11 und wird daher nicht oder nur zu einem geringen Anteil an den Seitenwänden 10, 11 reflektiert oder gebrochen.

Um die Funktion der Linse 1 zu verdeutlichen, ist in der Figur 1 ein Lichtstrom 12 durch mehrere Pfeile dargestellt, wobei der Lichtstrom 12 durch die objektseitige Seite 3 in die Linse 1 einfällt. Der einfallende Lichtstrom 12 erstreckt sich in einer Richtung R durch die Linse 1 und tritt zumindest teilweise durch die bildseitige Seite 4 aus der Linse 1 heraus. Die Richtung R verläuft parallel zur optischen Achse 2.

In seinem Verlauf durch die Linse 1 entlang der Richtung R trifft ein Teil des einfallenden Lichtstroms 12 auf die Reflexionsfläche 5, wobei dieser Teil als ein Teillichtstrom 13 aus dem einfallenden Lichtstrom 12 ausgekoppelt und schräg bzw. quer zur optischen Achse 2 von der Reflexionsfläche 5 reflektiert wird. Insbesondere erstreckt sich der Teillichtstrom 13 quer zur optischen Achse 2 und trifft in seinem Verlauf auf einen Randbereich 14 der Linse 1. Der Teillichtstrom 13 erstreckt sich entlang einer Auskopplungsrichtung A durch den Randbereich 14 hindurch, wobei die Auskopplungsrichtung A vorzugsweise senkrecht zum Randbereich 14 ausgerichtet ist. Von der Reflexionsfläche 5 aus gesehen in der Auskopplungsrichtung A hinter dem Randbereich 14 kann ein Messmittel 15 einer Abbildungsvorrichtung, beispielsweise zur Messung der Lichtintensität des Teillichtstroms 13, angeordnet sein. Trifft der Teillichtstrom 13 auf das Messmittel 15, so sind Rückschlüsse auf den einfallenden Lichtstrom 12 möglich. Insbesondere kann durch die Bestimmung der Lichtintensität des Teillichtstroms 13 auf die Lichtintensität des einfallenden Lichtstroms 12 geschlossen werden.

Durch die bildseitige Seite 5 tritt ein Nutzlichtstrom 16, welcher im Wesentlichen dem einfallenden Lichtstrom 12 abzüglich des Teillichtstroms 13 entspricht. Somit kann anhand der Lichtintensität des Teillichtstroms 13 auch auf die Lichtintensität des Nutzlichtstroms 16 geschlossen werden.

Die Linse 1 ist in der Figur 1 beispielhaft als eine Wabenkondensorlinse dargestellt, wobei die objektseitige Seite 3 wenigstens eine und insbesondere eine Vielzahl von objektseitigen lichtbrechenden Flächen 17 und die bildseitige Seite 4 wenigstens eine und insbesondere mehrere bildseitige lichtbrechende Flächen 18 aufweisen. Wabenkondensorlinsen werden zur Homogenisierung von Lichtströmen verwendet. Aufgrund der Eigenschaften der Wabenkondensorlinse beeinträchtigt das Vorsehen der Reflexionsfläche 5 oder der Öffnung 8 nicht nennenswert die Homogenität des Nutzlichtstroms 16. Folglich lässt sich mit der erfindungsgemäßen Linse 1 die Lichtintensität des einfallenden Lichtstroms 12 und somit des Nutzlichtstroms 16 einfach ermitteln, ohne dass die Homogenität des Nutzlichtstroms 16 in ungewünschtem Maß abnimmt.

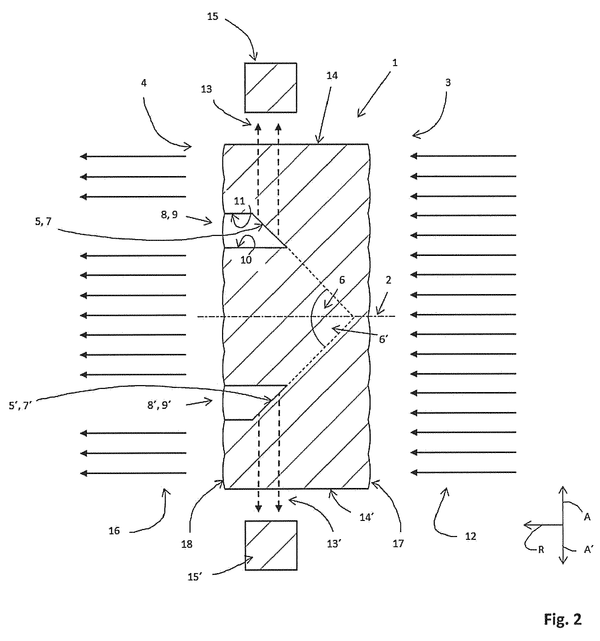

Figur 2 zeigt ein weiteres Ausführungsbeispiel der erfindungsgemäßen Linse 1 schematisch in einer Schnittdarstellung. Für Elemente, die in Funktion und/oder Aufbau Elementen des Ausführungsbeispiels der Figur 1 entsprechen, sind dieselben Bezugszeichen verwendet. Der Kürze halber ist im Folgenden lediglich auf die Unterschiede zum Ausführungsbeispiel der Figur 1 eingegangen.

Die Linse 1 des Ausführungsbeispiels der Figur 2 ist wie die Linse 1 des Ausführungsbeispiels der Figur 1 mit der Reflexionsfläche 5 versehen gezeigt, die zum Beispiel am Grund 7 der Öffnung 8 angeordnet ist. Zusätzlich weist die Linse 1 eine weitere Reflexionsfläche 5' auf, die quer zur optischen Achse 2 und beispielsweise in der Auskopplungsrichtung A beabstandet von der anderen Reflexionsfläche 5 angeordnet ist. Die weitere Reflexionsfläche 5' kann an einem Grund 7' einer weiteren Öffnung 8' angeordnet sein, wobei sich die beiden Öffnungen 8, 8' in der Richtung R öffnen und entgegen der Richtung R eine gleiche maximale Tiefe aufweisen können. Die Reflexionsflächen 5, 5' können also von der objektseitigen Seite 3 dieselben Abstände aufweisen. Insbesondere könne die Öffnungen 8, 8' quer zur optischen Achse 2 miteinander fluchtend angeordnet sein, sodass sich deren Projektionen quer zur optischen Achse 2 vollständig überlappen.

Der Winkel 6 zwischen der Reflexionsfläche 5 und der optischen Achse 2 entspricht betragsweise im Wesentlichen einem Winkel 6' der Reflexionsfläche 5 zur optischen Achse 2. Die Reflexionsfläche 5' ist jedoch vorzugsweise in einer anderen und insbesondere in der entgegengesetzten Richtung zur optischen Achse 2 verkippt, als die Reflexionsfläche 5. Der durch die Reflexionsfläche 5 ausgekoppelte Teillichtstrom erstreckt sich also in Richtung auf den Randbereich 14. Ein von der anderen Reflexionsfläche 5' ausgekoppelter Teillichtstrom 13' ist auf einen weiteren Randbereich 14' gerichtet, der dem Randbereich 14 gegenüber liegt. Der Teillichtstrom 13' erstreckt sich also von der weiteren Reflexionsfläche 5' in einer weiteren Auskopplungsrichtung A' zum weiteren Randbereich 14', wobei die beiden Auskopplungsrichtungen A, A' entgegengesetzt ausgerichtet sein können.

Auch die Linse 1 der Figur 2 ist vorzugsweise eine Wabenkondensorlinse, sodass die Auskopplung der Teillichtströme 13, 13' aus dem einfallenden Lichtstrom 12 nicht zu einer nennenswerten Verschlechterung der Homogenität des Nutzlichtstroms 16 führt.

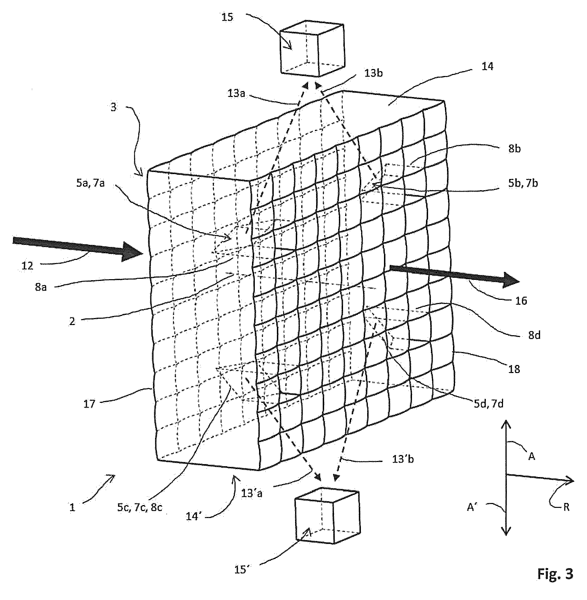

Figur 3 zeigt ein weiteres Ausführungsbeispiel der erfindungsgemäßen Linse 1 schematisch in einer perspektivischen Ansicht. Für Elemente, die in Funktion und/oder Aufbau den Elementen der vorherigen Ausführungsbeispiele entsprechen, sind dieselben Bezugszeichen verwendet. Der Kürze halber ist im Folgenden lediglich auf die Unterschiede zu den bisherigen Ausführungsbeispielen eingegangen.

Die Linse 1 der Figur 3 ist als Wabenkondensorlinse mit einer Vielzahl von objektseitigen und bildseitigen lichtbrechenden Flächen 17, 18 ausgebildet. Einander parallel zur optischen Achse 2 gegenüberliegend angeordnete lichtbrechende Flächen 17, 18 formen eine Teillinse der Wabenkondensorlinse aus.

Im Unterschied zum Ausführungsbeispiel der Figur 2 weist die Linse 1 des Ausführungsbeispiels der Figur 3 mehr als zwei und insbesondere vier Reflexionsflächen 5a, 5b, 5c, 5d auf. Jede der Reflexionsflächen 5a, 5b, 5c, 5d ist beispielhaft an einem Grund 7a, 7b, 7c, 7d einer Öffnung 8a, 8b, 8c, 8d angeordnet. Jede der Öffnungen 8a, 8b, 8c, 8d kann parallel zur optischen Achse 2 verlaufen und sich weg von der objektseitigen Seite 3 der Linse 1 öffnen.

Zwei der Reflexionsflächen und beispielsweise die Reflexionsflächen 5a, 5b, sind zwischen der optischen Achse 2 und dem Randbereich 14 angeordnet. Die von den beiden Reflexionsflächen 5a, 5b ausgekoppelten Teillichtströme 13a, 13b überlappen sich zumindest im Bereich des am oder hinter dem Randbereich 14 vorzusehenden Messmittels 15, sodass mit dem einen Messmittel 15 Intensitätsschwankungen beider Teillichtströme 13a, 13b ermittelt werden können.

Die optional vorgesehenen anderen beiden Reflexionsflächen 5c, 5d sind zwischen der optischen Achse 2 und dem weiteren Randbereich 14' angeordnet dargestellt. Die Reflexionsflächen 5c, 5d sind so ausgerichtet, dass sich von diesen ausgekoppelte Teillichtströme 13'a, 13'b im Bereich des am oder hinter dem weiteren Randbereich 14' vorzusehenden weiteren Messmittels 15' überlappen.

Liegt das Messmittel 15, 15' am Randbereich 14, 14' an, so können sich die Teillichtströme 13a, 13b oder 13'a, 13'b im Bereich der Randbereiche 14, 14' überlappen. Insbesondere können sich die Teillichtströme vollständig überlappen, damit das jeweilige Messmittel 15, 15' die Teillichtströme 13a, 13b oder 13'a, 13'b zu gleichen Anteilen empfängt.

Alternativ zum Ausführungsbeispiel der Figur 3 können die Reflexionsflächen 5a, 5b, 5c, 5d so ausgerichtet sein, dass die Teillichtströme 13a, 13b, 13'a, 13'b einander nicht überlappen und zum Beispiel jeweils einer der Teillichtströme 13a, 13b, 13'a, 13'b zu einem Randbereich der Linse 1 geleitet wird.

## Patentansprüche

1. Wabenkondensorlinse mit mehreren objektseitigen und mehreren bildseitigen lichtbrechenden Flächen (17), (18), **dadurch gekennzeichnet, dass**
die Wabenkondensorlinse eine schräg zur optischen Achse (2) der Wabenkondensorlinse ausgerichtete Reflexionsfläche (5) aufweist, wobei die Reflexionsfläche (5) zwischen den objektseitigen und der bildseitigen Flächen (17, 18) angeordnet ist, wobei die Reflexionsfläche (5) am Grund einer sich in die Wabenkondensorlinse hinein erstreckenden Öffnung (8) angeordnet ist, und wobei quer zur optischen Achse (2) die Größe der Reflexionsfläche (5) der Größe einer Teillinse oder einem Vielfachen der Größe einer Teillinse der Wabenkondensorlinse entspricht.

2. Wabenkondensorlinse nach Anspruch 1, **dadurch gekennzeichnet, dass** die Reflexionsfläche (5) ausgebildet ist, einen in die Linse (1) objektseitig einfallenden Lichtstrom (12) teilweise in Richtung auf einen Randbereich (14) der Linse (1) zu reflektieren.

3. Wabenkondensorlinse nach Anspruch 1 oder 2, **dadurch gekennzeichnet, dass** die Reflexionsfläche (5) eben ausgebildet ist.

4. Wabenkondensorlinse nach einem der Ansprüche 1 bis 3, **dadurch gekennzeichnet, dass** die Reflexionsfläche (5) durch eine Oberfläche der Linse (1) ausgebildet ist.

5. Wabenkondensorlinse nach einem der Ansprüche 1 bis 4, **dadurch gekennzeichnet, dass** ein Winkel (6) zwischen der Reflexionsfläche (5) und der optischen Achse (2) der Linse (1) größer als der Grenzwinkel der Totalreflexion von parallel zur optischen Achse (2) in die Linse (1) objektseitig eintretenden Lichtes ist.

6. Wabenkondensorlinse nach einem der Ansprüche 1 bis 5, **dadurch gekennzeichnet, dass** sich die Öffnung (8) von den objektseitigen lichtbrechenden Flächen (17) weg öffnet.

7. Wabenkondensorlinse nach einem der Ansprüche 1 bis 6, **dadurch gekennzeichnet, dass** die Linse (1) mehrere Reflexionsflächen (5') aufweist, die zwischen den objektseitigen und der bildseitigen lichtbrechenden Flächen (17, 18) angeordnet sind.

8. Wabenkondensorlinse nach Anspruch 7, **dadurch gekennzeichnet, dass** die Reflexionsflächen (5, 5') in unterschiedliche Richtungen zur optischen Achse (2) der Linse (1) verkippt sind.

## Claims

1. Honeycomb condenser lens with several object-side and several image-side refractive surfaces (17), (18), **characterized in that**
the honeycomb condenser lens comprises a reflection surface (5) oriented obliquely to the optical axis (2) of the honeycomb condenser lens, wherein the reflection surface (5) is arranged between the object-side and the image-side surfaces (17, 18), wherein the reflection surface (5) is arranged at the base of an opening (8) extending into the honeycomb condenser lens, and wherein the size of the reflection surface (5) corresponds to the size of a partial lens or a multiple of the size of a partial lens of the honeycomb condenser lens, transversely to the optical axis (2).

2. Honeycomb condenser lens according to claim 1, **characterized in that** the reflection surface (5) is configured to partially reflect a luminous flux (12) incident into the lens (1) on an object side toward an edge region (14) of the lens (1).

3. Honeycomb condenser lens according to claim 1 or 2, **characterized in that** the reflection surface (5) is formed planar.

4. Honeycomb condenser lens according to any of claims 1 to 3, **characterized in that** the reflection surface (5) is formed by a surface of the lens (1).

5. Honeycomb condenser lens according to any of claims 1 to 4, **characterized in that** an angle (6) between the reflection surface (5) and the optical axis (2) of the lens (1) is greater than the critical angle for total reflection of light entering the lens parallel to the optical axis (2) on an object side.

6. Honeycomb condenser lens according to any of claims 1 to 5, **characterized in that** the opening (8) opens away from the object-side refractive surfaces (17).

7. Honeycomb condenser lens according to any of claims 1 to 6, **characterized in that** the lens (1) comprises several reflection surfaces (5') arranged between the object-side and the image-side refractive surfaces (17, 18).

8. Honeycomb condenser lens according to claim 7, **characterized in that** the reflection surfaces (5, 5') are tilted in different directions with respect to the optical axis (2) of the lens (1).

## Revendications

1. Lentille de condenseur à nid d'abeilles, ayant plusieurs surfaces réfringentes (17) côté objet et plusieurs surfaces réfringentes (18) côté image, **caractérisée en ce que**
la lentille de condenseur à nid d'abeilles comprend une surface réfléchissante (5) orientée obliquement par rapport à l'axe optique (2) de la lentille de condenseur à nid d'abeilles, la surface réfléchissante (5) étant disposée entre les surfaces (17, 18) côté objet et côté image, la surface réfléchissante (5) étant disposée à la base d'une ouverture (8) s'étendant dans la lentille de condenseur à nid d'abeilles, et la taille de la surface réfléchissante (5) correspondant à la taille d'une lentille partielle ou à un multiple de la taille d'une lentille partielle de la lentille de condenseur à nid d'abeilles, transversalement à l'axe optique (2).

2. Lentille de condenseur à nid d'abeilles selon la revendication 1, **caractérisée en ce que** la surface réfléchissante (5) est configurée pour réfléchir partiellement un flux lumineux (12) incident dans la lentille (1) sur un côté objet vers une zone de bord (14) de la lentille (1).

3. Lentille de condenseur à nid d'abeilles selon la revendication 1 ou 2, **caractérisée en ce que** la surface réfléchissante (5) est réalisée de manière plane.

4. Lentille de condenseur à nid d'abeilles selon l'une des revendications 1 à 3, **caractérisée en ce que** la surface réfléchissante (5) est réalisée par une surface de la lentille (1).

5. Lentille de condenseur à nid d'abeilles selon l'une des revendications 1 à 4, **caractérisée en ce qu'**un angle (6) entre la surface réfléchissante (5) et l'axe optique (2) de la lentille (1) est supérieur à l'angle critique de la réflexion totale d'une lumière entrant dans la lentille (1) sur le côté objet parallèlement à l'axe optique (2).

6. Lentille de condenseur à nid d'abeilles selon l'une des revendications 1 à 5, **caractérisée en ce que** l'ouverture (8) s'ouvre dans le sens qui s'éloigne des surfaces réfringentes (17) côté objet.

7. Lentille de condenseur à nid d'abeilles selon l'une des revendications 1 à 6, **caractérisée en ce que** la lentille (1) comprend plusieurs surfaces réfléchissantes (5') qui sont disposées entre les surfaces réfringentes (17, 18) côté objet et côté image.

8. Lentille de condenseur à nid d'abeilles selon la revendication 7, **caractérisée en ce que** les surfaces réfléchissantes (5, 5') sont inclinées dans des directions différentes par rapport à l'axe optique (2) de la lentille (1).
